# EUROPÄISCHE PATENTSCHRIFT

(11) **EP 2 861 863 B1**
(45) Veröffentlichungstag und Bekanntmachung des Hinweises auf die Patenterteilung: **21.09.2016**
(21) Anmeldenummer: 13731729.3
(22) Anmeldetag: 19.06.2013
(51) Int. Cl.: F03B 3/04, F03B 11/00, F03B 13/10

(54) **UNTERWASSERTURBINE MIT GASHALTUNG**
UNDERWATER TURBINE CONTAINING GAS
TURBINE SOUS-MARINE AVEC RETENUE DE GAZ

(30) Priorität: 19.06.2012 DE 102012105335
(43) Veröffentlichungstag der Anmeldung: 22.04.2015
(73) Patentinhaber: Fella Maschinenbau GmbH, 63916 Amorbach (DE)
(72) Erfinder: FELLA, Günter, 63916 Amorbach (DE)
(74) Vertreter: Geirhos, Johann
(86) Internationale Anmeldenummer: PCT/EP2013/062792
(87) Internationale Veröffentlichungsnummer: WO 2013/190007

(56) Entgegenhaltungen:
- DE-A1- 1 955 016
- DE-A1-102006 043 946
- FR-A- 1 014 712
- GB-A- 606 027
- US-A- 3 447 782

## Beschreibung

Die Erfindung betrifft eine Unterwasserturbine mit Gashaltung eines Gehäuseinnenraums. Insbesondere betrifft die Erfindung eine Unterwasserturbine mit einem wasserdichten Gehäuse, in dem ein Generator angeordnet ist, mit einer Welle, die den Generator mit Turbine, bzw. genauer einem Turbinenlaufrad, verbindet, wobei die Welle unter einem Winkel gegenüber der Horizontalen angeordnet ist und die Welle nach unten aus dem Gehäuse durch eine Wellenöffnung heraus geführt ist, so dass ein Eindringen des Wassers in das Gehäuse durch ein in dem Gehäuse komprimiertes Gasvolumen verhindert wird, und mit einer Gaszuführung, durch die ein Gasvolumen in dem Gehäuse aufgefüllt werden kann.

Im Stand der Technik sind vollständig unter Wasser angeordnete Turbinen bekannt. Solche Unterwasserturbinen kommen vor allem dann zum Einsatz, wenn aus Gründen des Landschaftsschutzes oder der optischen Anpassung an die Umgebung auffällige und größere Kraftwerksbauten vermieden werden sollen. Insbesondere können durch Unterwasserturbinen auch Stau schwellen und Sperrwerke, die bisher nicht mit einem Kraftwerk ausgestattet sind, für die Energiegewinnung in einem kleineren und mittleren Leistungsbereich genutzt werden. Dabei können in einem Oberwasser Unterwasserturbinen angeordnet werden, ohne wie bei einem herkömmlichen Kraftwerk ein Generatorhaus vorzusehen, in dem die Generatoren angeordnet sind, die über Wellen mit darunterliegenden Turbinen verbunden sind. Die Unterwasserturbine liegt dabei vor einer Stauvorrichtung vollständig unter der Wasseroberfläche und neben der optischen Unauffälligkeit werden auch Betriebsgeräusche durch die Generatoren, Umrichter wie auch die mechanische Lagerung der Turbine selbst sowie die Turbine durch das umgebende Wasser gedämpft.

Bekannt sind dabei zwei Arten von Unterwasserturbinen, zum einen liegend angeordnete, bei denen eine sich drehende Welle im Wesentlichen horizontal angeordnet ist, und senkrecht angeordnete Unterwasserturbinen, mit einer senkrechten Orientierung der Turbinen- bzw. Generatorwelle.

Bei beiden Arten von Unterwasserturbinen besteht das Problem einer drehenden Abdichtung des Gehäuseinneren an der Wellendurchführung, um einen Kontakt der des Generators, der Lagerung und eventuelle einer Leistungselektronik oder ganz allgemein von Elektronik mit dem Wasser zu vermeiden. Bekannte Lösungen mit Wellendichtringen weisen vor dem Hintergrund des gewünschten durchgehenden und langen wartungsfreien Betriebes bei Wasserturbinen den Nachteil auf, dass der Dichtring naturgemäß auf einer Seite stets belastet durch den Druck des Wassers laufen muss, Verschleiß durch die schleifende Bewegung auf der Welle entsteht und Probleme mit der Schmierung der gleitenden Dichtlippe entstehen können. Auch müssen Vorkehrungen getroffen werden, trotz des Wellendichtringes eindringendes Wasser, auch wenn es sich um geringe Mengen handelt, wieder zu entfernen, da bei Turbinen sehr lange Laufzeiten ohne Wartung und im Dauerbetrieb erwünscht sind und sich auch durch nur geringe Leckagen dennoch erhebliche Mengen Leckagewasser ansammeln können.

Bei vertikal angeordneten Unterwasserturbinen ist bekannt, keine wasserdichte Wellendichtung vorzusehen, sondern das Gehäuse der Turbinen gasdicht auszuführen, so dass das eingeschlossene Gas durch den Wasserdruck komprimiert wird und sich an der Unterseite des Gehäuses ein Wasserspiegel ausbildet, jedoch der Bereich oberhalb des Wasserspiegels in dem Gehäuse trocken bleibt, in dem sich der Generator, Lagerung sowie eventuell die Elektronik befinden.

Nachteilig an diesem Stand der Technik ist, dass durch die hohen Strömungsgeschwindigkeiten des zu dem Turbinenrad fließenden Wassers es aufgrund des Bernoulli-Gesetzes zu einem starken Druckabfall kommt und im Betrieb der Unterwasserturbine Gas bzw. Luft aus dem Gehäuse herausgesaugt wird. Kommt es zu einer starken Verminderung der Strömungsgeschwindigkeit, beispielsweise durch Änderungen der Einstellung von Leitschaufeln oder auch durch das Schließen eines eventuell vorhandenen Wehres, so steigt der statische Wasserdruck schnell an und es kann zu einem zu hohen Ansteigen des Wasserspiegels in dem Gehäuse kommen, das nun zu wenig Gas enthält, das komprimiert werden könnte. Auch kann es zu starken Schwankungen aufgrund von Hochwasserereignissen kommen, die zu einem hohen statischen Wasserdruck und, insbesondere solange die Unterwasserturbine bei einem Hochwasser noch in Betrieb ist, zu sehr großen Durchflussmengen mit hohen Strömungsgeschwindigkeiten führen, so dass bei einem Abschalten es zu einem schnell ansteigenden Wasserspiegel in dem Gehäuse kommen kann.

Bekannt sind Gasregelvorrichtungen, mit denen Gas in das Gehäuse geregelt über ein Ventil zugeleitet werden kann, um einen Gasverlust auszugleichen. Insbesondere ist auch bekannt, als ein solches Gas ein inertes Gas einzusetzen, beispielsweise Stickstoff. Dadurch kann die Gefahr von Entzündungen bei Überhitzung in der Lagerung, dem Generator, oder einer eventuell vorhandenen Elektronik vermindert werden. Des Weiteren wird durch die Abwesenheit von Sauerstoff auch die Korrosion verhindert.

Nachteilig an diesem Stand der Technik ist, dass bei einem Ausfall der Gasregelvorrichtung es dennoch zu einem Eindringen von Wasser kommen kann. Auch besteht die Möglichkeit, dass bei einer sehr raschen Reduzierung der Strömungsgeschwindigkeit es zu einem zu schnellen Anstieg des Wasserspiegels kommt und ein Gasausgleich nicht schnell genug erfolgen kann.

Aus der DE 10 2006 043 946 A1 ist eine Unterwasserturbine mit einem abgedichteten Gehäuse bekannt, das ein komprimiertes Gaspolster einschließt und eine gegenüber dem Umgebungswasser nach unten offene Durchführung für die Turbinenwelle aufweist. In einer Ausführungsform ist aus der DE 10 2006 043 946 A1 bekannt, eine rohrförmige Hülle um die Turbinenwelle innerhalb des Gehäuses weiter nach oben zu führen, so dass ein Wasserspiegel weiter ansteigen kann, ohne mit wasserempfindlichen Teilen in Berührung zu kommen. Nach einem weiteren Ausführungsbeispiel ist aus der DE 10 2006 043 946 A1 bekannt, einen Zugang für Gas in das Gehäuse in dem Bereich des Generators zu führen, insbesondere für ein inertes Gas wie Stickstoff.

Der vorliegenden Erfindung liegt die Aufgabe zugrunde, bei einer Unterwasserturbine mit einem abgedichteten Gehäuse und gegenüber dem Umgebungswasser offenen Wellendurchgang eine sichere und zuverlässige Regelung des Gasinnenvolumens zur Verfügung zu stellen, so dass ein Abdichtungsbereich stets frei von Wasser bleibt.

Diese Aufgabe wird durch eine Unterwasserturbine mit den Merkmalen des Patentanspruchs 1 gelöst. Vorteilhafte Weiterbildungen und Ausgestaltungen der Erfindung sind in den Unteransprüchen angegeben.

Die Aufgabe wird erfindungsgemäß dadurch gelöst, dass bei einer Unterwasserturbine mit einem wasserdichten Gehäuse, in dem ein Generator angeordnet ist, mit einer Welle, die den Generator mit einem Turbinenlaufrad verbindet, wobei die Welle unter einem Winkel gegenüber der Horizontalen angeordnet ist und die Welle nach unten aus dem Gehäuse durch eine Wellenöffnung heraus geführt ist, so dass ein Eindringen des Wassers in das Gehäuse durch ein in dem Gehäuse komprimiertes Gasvolumen verhindert wird, und mit einer Gaszuführung, durch die ein Gasvolumen in dem Gehäuse aufgefüllt werden kann, die Gaszuführung durch eine mit einem Gasvorrat konstanten Drucks, insbesondere der Umgebungsluft, in Verbindung stehende Gaszuleitung gebildet wird, deren Gaszuleitungsmündung im unteren Bereich des Gehäuses oberhalb der Wellenöffnung angeordnet ist.

Vorteilhaft kann dadurch unabhängig von einer Stromversorgung und einer Regeleinrichtung sichergestellt werden, dass stets eine verloren gegangene Gasmenge, die während des Betriebs durch den Bernoulli-Effekt abgesaugt wurde, wieder ergänzt wird. Wenn während des Betriebs der Unterwasserturbine Wasser an der Wellenöffnung vorbeiströmt, so sinkt der Druck in dem Gehäuse der Unterwasserturbine ab und fällt der Wasserspiegel in dem unteren Bereich des Gehäuses. Wenn dabei der Wasserspiegel bis auf die Höhe der Wellenöffnung abfällt, so kann Gas mit dem strömenden Wasser mitgerissen werden und verliert das Innere des Gehäuses der Unterwasserturbine einen Teil der Gasmenge, die durch Kompression ein zu weites Eindringen des Wassers bei Stillstand der Unterwasserturbine verhindert. Sobald jedoch im Bereich der Gaszuleitungsmündung die Summe aus Druck der in dem Gehäuse stehenden Wassersäule und Innengasdruck im Inneren des Gehäuses geringer wird als der Druck in der Gaszuführung, beispielsweise bei einer Verbindung mit der Außenluft der Atmosphärendruck, so führt die Gaszuleitung Gas zu. Somit wird, auch wenn durch das vorbeiströmende Wasser aufgrund eines entsprechend weit abgesunken Wasserspiegels Gas mitgerissen wird, dieses durch die Gaszuleitung ergänzt. Insbesondere wird auch nach einem Stillstand der Unterwasserturbine bei nunmehr ansteigendem Wasserdruck noch solange Gas durch die Gaszuleitung nachgeführt, wie in Summe an der Gaszuleitungsmündung ein niedrigerer Druck als der Außenluftdruck oder als der Druck des Gasvorrats herrscht. Dadurch wird vorteilhaft automatisch Gas oder Luft als Ersatz für verloren gegangenes Gas nachgeführt. Insbesondere benötigt die Gashaltung bzw. Lufthaltung der erfindungsgemäßen Unterwasserturbine in der Ausführungsform, in der die Gaszuleitung mit der Außenluft verbunden ist, keine Ventile oder Steuerungen, die potenziell im Dauerbetrieb Ursache von Störungen sein können. Die Regelung der in dem Gehäuse der Unterwasserturbine eingeschlossenen Gasmenge bzw. Luftmenge wird allein durch die Gaszuleitung bewirkt durch die Anordnung der Gaszuleitungsmündung knapp oberhalb der Wellenöffnung. Die Gaszuleitungsmündung wird dabei bevorzugt so tief wie möglich angeordnet. Bei Stillstand der Unterwasserturbine und komprimiertem Gasinnenvolumen in deren Gehäuse liegt die Gaszuleitungsmündung unterhalb des Wasserspiegels und ist gegenüber dem Gasinnenvolumen abgedichtet. Alternativ kann die Gaszuleitung auch mit einem unter Druck stehenden Gasbehälter als Gasvorrat anstatt der Außenluft verbunden sein, beispielsweise wenn eine Unterwasserturbine sehr tief unter Wasser mit sehr hohem Wasserdruck angeordnet ist. Dabei kann durch einen Druckminderer ein bestimmtes Druckniveau vorgegeben werden. Insbesondere ermöglicht eine solche Lösung auch, anstatt Außenluft ein anderes Gas, etwa ein Inertgas zuzuführen. Die erfindungsgemäße Unterwasserturbine ermöglicht eine einfache und kostengünstige Ergänzung des Gasvolumens bzw. Luftvolumens.

Vorteilhaft ist die Welle senkrecht angeordnet.

Die erfindungsgemäße Lösung ist für alle Unterwasserturbine geeignet, die letztlich eine zumindest nach unten geneigte Welle aufweisen, so dass eine Wellenöffnung an der tiefsten Stelle des Gehäuses angeordnet werden kann. Besonders vorteilhaft ist die erfindungsgemäße Lösung jedoch für Unterwasserturbinen mit einer senkrecht angeordneten Welle, da bei diesen der größte Abstand zwischen der Wellenöffnung und dem gegenüber Wasser empfindlichen Generator erreicht werden kann.

In einer günstigen Weiterbildung der Erfindung ist unterhalb der Gaszuleitungsmündung in dem Gehäuse gegenüber der Welle eine den Wasserdurchtritt verzögernde erste Dichtung, insbesondere eine Labyrinthdichtung, angeordnet.

Eine solche Dichtung, insbesondere eine Labyrinthdichtung, kann so ausgeführt sein, dass sie die Welle nicht berührt und es somit zu keinem Verschleiß kommt. Durch die Dichtung wird beim Wiederanstieg des Wasserspiegels der Durchtritt des Wassers verzögert, da mit der Dichtung beispielsweise eine Querabtrennung in dem Gehäuse vorgesehen ist, insbesondere eine Querplatte, und die gesamte aufsteigende Wassermengen durch diese Dichtung mit einem wirksamen Durchlassquerschnitt für Wasser hindurch strömen muss. Beispielsweise bei einer Labyrinthdichtung, die mehrere, die Welle nicht berührende Kanten, nacheinander aufweist, bilden sich Wirbel und muss das gesamte Wasser durch den engen Spaltquerschnitt zwischen den Kanten und der Welle hindurch treten. Dadurch kommt es zu einer erheblichen zeitlichen Verzögerung des Anstiegs des Wasserspiegels. In der Folge verbleibt ein größerer Zeitraum, in dem Luft oder Gas durch die Gaszuleitung aufgrund des im Gehäuseinneren herrschenden Unterdrucks nach einem Anhalten der Unterwasserturbine nachströmen kann und eine zuvor im Betrieb verlorene Gasmenge kann ergänzt werden.

Vorteilhaft ist oberhalb der Gaszuleitungsmündung in dem Gehäuse gegenüber der Welle eine den Wasserdurchtritt verzögernde zweite Dichtung, insbesondere eine Labyrinthdichtung, angeordnet.

Durch eine solche zweite Abdichtung, die ebenfalls eine Querplatte oder eine Querabtrennung des Gehäuses aufweist und grundsätzlich gleich wie die erste Dichtung aufgebaut sein kann, wird verhindert, dass durch das einströmende Wasser sich bildendes Spritzwasser in den Bereich des darüber liegenden Generators bzw. der Lagerung, oder auch einer eventuell zugehörigen Elektronik, gelangen und Schäden verursachen kann. Zusätzlich kann bei einem sehr hohen Anstieg des Wasserspiegels eine zweite zeitliche Verzögerung erreicht werden.

In einer vorteilhaften Ausgestaltung der Erfindung ist oberhalb der Wellenöffnung ein Kompressionsraum angeordnet, dessen Volumen gegenüber einem freien Volumen im Bereich des Generators groß ist.

Wenn beispielsweise das gesamte Volumen des Kompressionsraums in etwa gleich groß ist wie die noch freien Volumen im Bereich des Generator oberhalb, so führt die Verdrängung der Luft bzw. des Gases aus dem Kompressionsraum zu einer Verdoppelung des Gasdrucks. Wenn daher der Bereich des Generators und der Lagerung, sowie einer eventuellen Elektronik, im oberen Teil des Gehäuses so gestaltet wird, dass möglichst wenig freie Volumen verbleiben bzw. eventuell diese freien Volumen durch Füllkörper aufgefüllt werden, und gleichzeitig der Kompressionsraum so gestaltet wird, dass er ein möglichst großes Volumen aufweist, so kann bei einer Annäherung des Wasserspiegels an den Bereich des Generators eine schnelle Druckerhöhung und somit eine niedrig liegende Gleichgewichtslage des Wasserspiegels erreicht werden.

Der Kompressionsraum kann unterhalb der zweiten Dichtung angeordnet sein

Dadurch wird der Generator zusätzlich geschützt, wenn der Wasserspiegel einmal den gesamten Kompressionsraum überwinden sollte, da ein Durchtritt des Wassers weiter nach oben erheblich verzögert wird. Dies ermöglicht beispielsweise automatisierte Gegenmaßnahmen oder eine Alarmierung.

Vorteilhaft ist in dem Gehäuse ein Wassersensor angeordnet, insbesondere ein Näherungssensor, der einen unzulässig hoch in den Bereich des Generators ansteigenden Wasserspiegel erfassen kann.

Dadurch können bei einem unzulässig hohen Anstieg des Wasserspiegels eine Alarmauslösung oder automatisierte Gegenmaßnahmen erfolgen. Durch einen Näherungssensor kann dabei eine abhängig von dem Grad der Gefährdung gestaffelt erfolgende Alarmauslösung erfolgen oder die Art automatisierter Gegenmaßnahmen kann entsprechend angepasst werden.

In einer günstigen Ausführungsform ist der Wassersensor oberhalb der zweiten Dichtung angeordnet.

Im Regelfall sollte der Wasserspiegel nicht oberhalb der zweiten Dichtung ansteigen. Tritt dies dennoch auf, kann dies als Fehlerfall angenommen werden und es können Schutzmaßnahmen für den Generator und die Lagerung folgen, wie etwa eine automatisierte elektrische Abschaltung zur Vermeidung von Kurzschlüssen.

Es ist auch möglich, als weiteren Schutz mit zunehmender Höhe des Gehäuses sich im Querschnitt aufweitende Bereiche vorzusehen, da dadurch der relative Druckanstieg mit Anstieg des Wasserspiegels vergrößert wird.

Vorteilhaft kann eine zweite Gaszuführung ventilbetätigt Gas in den Bereich des Generators einleiten.

Dadurch kann beispielsweise als automatisierte Gegenmaßnahmen im Notfall zusätzliches Gas oder Luft eingedrückt werden, um einen Wasserspiegel wieder nach unten zu drücken, wenn dieser dennoch unzulässig weit nach oben gestiegen sein sollte

Die zweite Gaszuführung kann ein Inertgas einleiten, insbesondere Stickstoff.

Dadurch wird der Bereich des Generators und der Lagerung, sowie einer eventuellen Elektronik, zum einen vor Korrosion geschützt, da Sauerstoff verdrängt wird, und zum anderen bewirkt dies einen Brandschutz, so dass bei Überhitzungen es nicht zu einer Entzündung kommen kann.

Die Funktion der zweiten Gaszuführung kann grundsätzlich auch durch die Gaszuleitungen erfüllt werden, wenn diese entsprechend mit Ventilen, beispielsweise gegenüber der Atmosphäre, abgesperrt werden kann und aus einem Gasbehälter mit Gas durch weitere Ventile beaufschlagt werden kann.

In einer zweckmäßigen Ausgestaltung hat die Gaszuleitungen beispielsweise einen Nenndurchmesser etwas größer als 10 mm.

Weitere Vorteile und Einzelheiten der Erfindung werden anhand der in den schematischen Figuren dargestellten Ausführungsbeispiels näher erläutert. Hierbei zeigt
- Fig. 1: eine erfindungsgemäße Unterwasserturbine und
- Fig. 2: vergrößert den mit II bezeichneten Ausschnitt der Fig. 1.

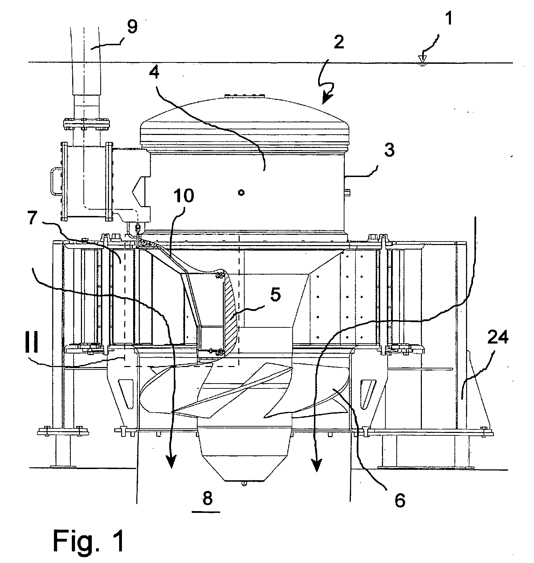

Die Fig. 1 zeigt eine erfindungsgemäße Unterwasserturbine 2. Unterhalb eines Wasserspiegels 1 ist die Unterwasserturbine 2 mit einem Gehäuse 3 angeordnet, wobei in einem oberen Teil des Gehäuses 4 ein nicht dargestellter Generator angeordnet ist, der über eine senkrechte Welle 5 mit Turbine, bzw. genauer einem Turbinenlaufrad 6, verbunden ist. Die Unterwasserturbine 2 ist in einem Gestell als Lagergestell 24 eingebaut. Über radial angeordnete Leitschaufeln 7 wird das Wasser, wie durch die Pfeile verdeutlicht, auf das Turbinenlaufrad 6 geleitet und durch einen Saugschacht 8 in ein nicht dargestelltes Unterwasser abgeleitet. Über einen Anschlussrohr 9 ist die Unterwasserturbine 2 an elektrische Kabel zur Ableitung der erzeugten Energie angeschlossen. Über das Anschlussrohr 9 wird auch eine Gaszuleitungen 10 angeschlossen, die in dem hier beschriebenen Ausführungsbeispiele mit der Außenluft verbunden ist, jedoch alternativ auch mit einem Gasvorrat eines anderen Gases unter einem frei wählbaren Druck verbunden sein kann.

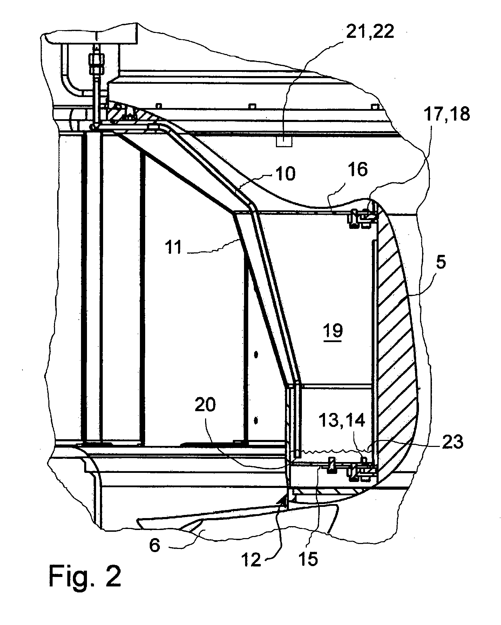

Die Fig. 2 zeigt vergrößert den mit II bezeichneten Ausschnitt der Fig. 1 mit der Welle 5 und dem Turbinenlaufrad 6. An der Unterkante eines unteren Gehäuseteils 11 befindet sich die Wellenöffnung 12. Unmittelbar oberhalb ist die erste, den Wasserdurchtritt verzögernde Dichtung 13 angeordnet, die als Labyrinthdichtung 14 ausgebildet ist. Die Labyrinthdichtung 14 ist in einer unteren Querplatte 15 angeordnet, die den gesamten Gehäusequerschnitt des unteren Gehäuseteils 11 verschließt. Eine zweite, obere Querplatte 16 verschließt ebenfalls den unteren Gehäuseteil 11 und ist mit einer zweiten, den Wasserdurchtritt verzögernde Dichtung 17 ausgestattet, die gegenüber der Welle 5 abdichtet. Diese zweite Dichtung 17 ist ebenfalls als Labyrinthdichtung 18 ausgebildet. Zwischen der ersten Dichtung 13 und der zweiten Dichtung 17 ist ein Kompressionsraum 19 angeordnet, in dem die Gaszuleitung 10 mit einer Gaszuleitungsmündung 20 endet. Die Gaszuleitungsmündung 20 ist direkt oberhalb der ersten Dichtung 13 und nur wenig oberhalb der Wellenöffnung 12 angeordnet. Eine Näherungssensor 21 kann als Wassersensor 22 erfassen, wenn der Wasserspiegel oberhalb der zweiten Dichtung 17 steigt, so dass in diesem Fall ein Alarm erfolgen kann oder durch eine zweite, nicht dargestellter Gaszuleitung Gas in das Innere des Gehäuses 3 der Unterwasserturbine 2 gedrückt werden kann, um den weiteren Anstieg des Wasserspiegels bis in den Bereich des Generator zu verhindern.

Wenn während des Betriebs der Unterwasserturbine 2 Wasser an der Wellenöffnung 12 vorbeiströmt, so sinkt der Druck in dem Gehäuse 3 der Unterwasserturbine 2 aufgrund des Bernoulli-Effekts ab und ein Wasserspiegel 23 fällt in dem unteren Bereich des Gehäuses 3,11. Wenn dabei der Wasserspiegel 23 bis auf die Höhe der Wellenöffnung 12 abfällt, so kann Gas mit dem strömenden Wasser mitgerissen werden. In diesem Fall ist der Atmosphärendruck in der Gaszuleitung 10 höher und Außenluft strömt in den Kompressionsraum 19 bzw. den Innenraum des Gehäuses 3 nach.

## Patentansprüche

1. Unterwasserturbine mit einem wasserdichten Gehäuse (3), in dem ein Generator angeordnet ist, mit einer Welle (5), die den Generator mit einem Turbinenlaufrad (6) verbindet, wobei die Welle (5) unter einem Winkel gegenüber der Horizontalen angeordnet ist und die Welle (5) nach unten aus dem Gehäuse durch eine Wellenöffnung (12) heraus geführt ist, so dass ein Eindringen des Wassers in das Gehäuse (3) durch ein in dem Gehäuse (3) komprimiertes Gasvolumen verhindert wird, und mit einer Gaszuführung, durch die ein Gasvolumen in dem Gehäuse (3) aufgefüllt werden kann,
**dadurch gekennzeichnet,**
**dass** die Gaszuführung durch eine mit einem Gasvorrat konstanten Drucks, insbesondere der Umgebungsluft, in Verbindung stehende Gaszuleitung (10) gebildet wird, deren Gaszuleitungsmündung (20) im unteren Bereich des Gehäuses (3) oberhalb der Wellenöffnung (12) angeordnet ist.

2. Unterwasserturbine nach Anspruch 1,
**dadurch gekennzeichnet,**
**dass** die Welle (5) senkrecht angeordnet ist.

3. Unterwasserturbine nach Anspruch 1 oder 2,
**dadurch gekennzeichnet,**
**dass** unterhalb der Gaszuleitungsmündung (20) in dem Gehäuse (3) gegenüber der Welle (5) eine den Wasserdurchtritt verzögernde erste Dichtung (13), insbesondere eine Labyrinthdichtung (14), angeordnet ist.

4. Unterwasserturbine nach einem der Ansprüche 1 bis 3,
**dadurch gekennzeichnet,**
**dass** oberhalb der Gaszuleitungsmündung (20) in dem Gehäuse (3) gegenüber der Welle (5) eine den Wasserdurchtritt verzögernde zweite Dichtung (17), insbesondere eine Labyrinthdichtung (18), angeordnet ist.

5. Unterwasserturbine nach einem der Ansprüche 1 bis 4,
**dadurch gekennzeichnet,**
**dass** oberhalb der Wellenöffnung (12) ein Kompressionsraum (19) angeordnet ist,
dessen Volumen gegenüber einem freien Volumen im Bereich des Generators groß ist.

6. Unterwasserturbine nach Anspruch 5 und nach Anspruch 4,
**dadurch gekennzeichnet,**
**dass** der Kompressionsraum (19) unterhalb der zweiten Dichtung (17) angeordnet ist

7. Unterwasserturbine nach einem der Ansprüche 1 bis 6,
**dadurch gekennzeichnet,**
**dass** in dem Gehäuse (3) ein Wassersensor (22) angeordnet ist, insbesondere ein Näherungssensor (21), der einen unzulässig hoch in den Bereich des Generators ansteigenden Wasserspiegel (23) erfassen kann.

8. Unterwasserturbine nach Anspruch 7 und nach Anspruch 4,
**dadurch gekennzeichnet,**
**dass** der Wassersensor (22) oberhalb der zweiten Dichtung (17) angeordnet ist.

9. Unterwasserturbine nach einem der Ansprüche 1 bis 8,
**dadurch gekennzeichnet,**
**dass** eine zweite Gaszuführung ventilbetätigt Gas in den Bereich des Generators einleiten kann.

10. Unterwasserturbine nach Anspruch 9,
**dadurch gekennzeichnet,**
**dass** die zweite Gaszuführung ein Inertgas einleiten kann, insbesondere Stickstoff.

## Claims

1. Underwater turbine having a watertight housing (3) in which there is arranged a generator, having a shaft (5) that connects the generator to a turbine rotor (6), wherein the shaft (5) is arranged at an angle with respect to the horizontal and the shaft (5) exits the bottom of the housing through a shaft opening (12) such that ingress of water into the housing (3) is prevented by a compressed gas volume in the housing (3), and having a gas supply by means of which a gas volume in the housing (3) can be topped up,
**characterized in that**
the gas supply is formed by a gas supply line (10) that is connected to a gas reservoir at constant pressure, in particular ambient air, wherein the opening (20) of this gas supply line is arranged in the lower region of the housing (3) above the shaft opening (12).

2. Underwater turbine according to Claim 1, **characterized in that**
the shaft (5) is arranged vertically.

3. Underwater turbine according to Claim 1 or 2, **characterized in that**
a first seal (13), in particular a labyrinth seal (14), which delays the passage of water is arranged below the gas supply line opening (20) in the housing (3) facing the shaft (5).

4. Underwater turbine according to one of Claims 1 to 3,
**characterized in that**
a second seal (17), in particular a labyrinth seal (18), which delays the passage of water is arranged above the gas supply line opening (20) in the housing (3) facing the shaft (5).

5. Underwater turbine according to one of Claims 1 to 4,
**characterized in that**
a compression space (19) is arranged above the shaft opening (12), the volume of which space is large in comparison to a free volume in the region of the generator.

6. Underwater turbine according to Claims 4 and 5, **characterized in that**
the compression space (19) is arranged below the second seal (17).

7. Underwater turbine according to one of Claims 1 to 6,
**characterized in that**
there is arranged in the housing (3) a water sensor (22), in particular a proximity sensor (21), which is able to detect a water level (23) rising too high in the region of the generator.

8. Underwater turbine according to Claims 7 and 4, **characterized in that**
the water sensor (22) is arranged above the second seal (17).

9. Underwater turbine according to one of Claims 1 to 8,
**characterized in that**
a second gas supply can introduce gas into the region of the generator, this being done by actuation of a valve.

10. Underwater turbine according to Claim 9,
**characterized in that**
the second gas supply can introduce an inert gas, in particular nitrogen.

## Revendications

1. Turbine sous-marine avec une enceinte étanche à l'eau (3), dans laquelle un générateur est disposé, avec un arbre (5) qui relie le générateur à une roue mobile de turbine (6), dans laquelle l'arbre (5) est disposé sous un certain angle par rapport à l'horizontale et l'arbre (5) est mené vers le bas hors de l'enceinte à travers une ouverture d'arbre (12), de telle manière qu'une pénétration d'eau dans l'enceinte (3) soit empêchée par un volume de gaz comprimé dans l'enceinte (3), et avec une arrivée de gaz, par laquelle un volume de gaz peut être chargé dans l'enceinte (3), **caractérisée en ce que** l'arrivée de gaz est formée par une conduite d'amenée de gaz (10) qui est en communication avec une réserve de gaz à pression constante, en particulier l'air atmosphérique, dont l'embouchure de la conduite d'amenée de gaz (20) est agencée dans la région inférieure de l'enceinte (3) au-dessus de l'ouverture d'arbre (12).

2. Turbine sous-marine selon la revendication 1, **caractérisée en ce que** l'arbre (5) est disposé verticalement.

3. Turbine sous-marine selon la revendication 1 ou 2, **caractérisée en ce qu'**un premier joint (13) retardant la pénétration d'eau, en particulier un joint à labyrinthe (14), est disposé en dessous de l'embouchure de la conduite d'amenée de gaz (20) dans l'enceinte (3) vis-à-vis de l'arbre (5).

4. Turbine sous-marine selon l'une quelconque des revendications 1 à 3, **caractérisée en ce qu'**un deuxième joint (17) retardant la pénétration d'eau, en particulier un joint à labyrinthe (18), est disposé au-dessus de l'embouchure de la conduite d'amenée de gaz (20) dans l'enceinte (3) vis-à-vis de l'arbre (5).

5. Turbine sous-marine selon l'une quelconque des revendications 1 à 4, **caractérisée en ce qu'**une chambre de compression (19) est disposée au-dessus de l'ouverture d'arbre (12), dont le volume est grand par rapport à un volume libre dans la région du générateur.

6. Turbine sous-marine selon la revendication 5 et selon la revendication 4, **caractérisée en ce que** la chambre de compression (19) est disposée en dessous du deuxième joint (17).

7. Turbine sous-marine selon l'une quelconque des revendications 1 à 6, **caractérisée en ce qu'**un détecteur d'eau (22) est disposé dans l'enceinte (3), en particulier un détecteur de proximité (21), qui peut détecter un niveau d'eau (23) atteignant une hauteur inadmissible dans la région du générateur.

8. Turbine sous-marine selon la revendication 7 et selon la revendication 4, **caractérisée en ce que** le détecteur d'eau (22) est disposé au-dessus du deuxième joint (17).

9. Turbine sous-marine selon l'une quelconque des revendications 1 à 8, **caractérisée en ce qu'**une deuxième arrivée de gaz peut introduire du gaz par actionnement d'une soupape dans la région du générateur.

10. Turbine sous-marine selon la revendication 9, **caractérisée en ce que** la deuxième arrivée de gaz peut introduire un gaz inerte, en particulier de l'azote.
